# FASCICULE DE BREVET EUROPEEN

(11) **EP 3 727 916 B1**
(45) Date de publication et mention de la délivrance du brevet: **25.08.2021**
(21) Numéro de dépôt: 18804325.1
(22) Date de dépôt: 20.11.2018
(51) Int. Cl.: B60K 1/00, B60K 25/00, B60K 13/06, B60K 11/02, B60K 6/405

(54) **SUPPORT DE MOTEUR ÉLECTRIQUE COMPRENANT UN CONDUIT INTÉGRÉ ET GROUPE MOTOPROPULSEUR COMPRENANT UN TEL SUPPORT**
HALTERUNG FÜR ELEKTRISCHEN MOTOR MIT INTEGRIERTER ROHRLEITUNG UND MOTORANTRIEBSGRUPPE MIT EINER SOLCHEN HALTERUNG
SUPPORT OF ELECTRIC MOTOR WITH INTEGRATED CONDUIT AND MOTOR PROPULSION GROUP WITH SUCH A SUPPORT

(30) Priorité: 22.12.2017 FR 1763046
(43) Date de publication de la demande: 28.10.2020
(73) Titulaire: Renault S.A.S., 92100 Boulogne-Billancourt (FR)
(72) Inventeur: MILLON, Jean-Pierre, 78870 Bailly (FR); TESSIER, Ludovic, 93370 Montfermeil (FR)
(86) Numéro de dépôt international: PCT/EP2018/081909
(87) Numéro de publication internationale: WO 2019/120828

(56) Documents cités:
- EP-A1- 2 927 037
- EP-A1- 2 937 238
- FR-A1- 3 008 038
- US-A1- 2016 137 047

## Description

La présente invention concerne le domaine des moteurs, en particulier des groupes motopropulseurs hybrides.

Plus particulièrement, la présente invention concerne un support de moteur électrique dont une portion forme une partie d'une conduite de circulation de fluide.

Dans les groupements motopropulseurs hybrides, la transmission est apte à être entrainée selon le cas par un moteur thermique ou un moteur électrique. Le plus souvent ce moteur électrique est placé latéralement par rapport au moteur thermique, ce qui pose des problèmes en termes d'agencement du groupement motopropulseur dans le compartiment moteur du véhicule. Notamment, l'agencement des circuits de refroidissement du moteur thermique est délicat ; il est impératif d'en tenir compte lors du placement du moteur électrique. Le plus souvent cet agencement est réalisé au détriment de la compacité.

Le document FR 3 008 038 A1 décrit un support de moteur électrique comprenant une portion de montage sur un moteur thermique et une portion de fixation d'un moteur électrique.

Le problème technique que vise à résoudre l'invention est donc d'améliorer l'agencement d'un groupement motopropulseur hybride.

A cet effet, un premier objet de l'invention est un support de moteur électrique comprenant au moins trois portions distinctes:
- une portion de montage sur un moteur thermique,
- une portion de fixation d'un moteur électrique,
- une portion formant un conduit intégré de circulation de fluide.

Ainsi, lorsque le support est agencé dans un groupe motopropulseur hybride, le conduit intégré peut être connecté fluidiquement d'un côté au circuit de refroidissement formé dans le carter-cylindres du moteur thermique, et de l'autre côté connecté fluidiquement au reste du circuit de refroidissement du groupement motopropulseur, par exemple à un échangeur thermique.

Cela permet de réaliser une plus grande boucle avec une conduite de circuit de refroidissement du moteur thermique, ci-après conduite de refroidissement. Ainsi, le moteur électrique peut être placé à l'intérieur de cette boucle, en particulier au plus près du moteur thermique.

Le conduit intégré est ainsi une partie intermédiaire de la conduite de refroidissement formant cette boucle. Comme le conduit intégré est une portion du support, il est ainsi rigide et assure ainsi un maintien plus ferme de la boucle formée, avec moins de débattement.

Le support selon l'invention peut optionnellement présenter une ou plusieurs des caractéristiques suivantes :
- le support est une plaque ; c'est une forme simple à réaliser et optimale pour un support de moteurs ;
- la portion de montage comprend un orifice pour le passage d'un arbre d'entrainement du moteur thermique, et/ou la portion de fixation comprend un orifice pour passage d'un arbre d'entrainement du moteur électrique ; les moteurs peuvent être ainsi placés tous les deux d'un côté du support et chacun fixés fermement à ce dernier ;
- le conduit intégré s'étend selon un axe contenu dans un plan selon lequel s'étend la plaque formée par le support ; cela améliore notamment l'encombrement et également la fermeté du maintien de la conduite de refroidissement ;
- le conduit intégré (13) forme une pièce monobloc avec l'ensemble du support (10) ; le conduit assure ainsi un maintien ferme de la conduite de refroidissement, diminuant les débattements ;
- le conduit intégré peut être réalisé lors du moulage du support en une seule pièce avec celui-ci ou surmoulage du conduit intégré sur une pièce formant le reste du support ;
- l'intérieur du conduit intégré peut être obtenu lors du moulage du support ou lors de son surmoulage, ou ultérieurement par usinage dans la partie moulée ou surmoulée correspondante.

Un autre objet de l'invention est un groupe motopropulseur hybride comprenant :
- un moteur thermique,
- un support selon l'invention, dont la portion de montage est fixée au moteur thermique,
- un moteur électrique fixé sur ladite portion de fixation de manière à être supporté par ledit support.

Un tel groupe motopropulseur est compact et permet un branchement rapide d'un circuit de refroidissement dont une partie est formée par le conduit intégré.

Par exemple, le groupe motopropulseur hybride peut comprendre une première liaison fluidique entre une première extrémité du conduit intégré et le moteur thermique. Ainsi, une partie des branchements de refroidissement est déjà effectuée avant la pose du groupe motopropulseur dans le compartiment moteur du véhicule.

Un autre objet de l'invention est un système de motorisation hybride comprenant :
- un groupe motopropulseur selon l'invention,
- un échangeur thermique,
- une deuxième liaison fluidique entre une deuxième extrémité du conduit intégré et l'échangeur thermique.

Ainsi, la première liaison fluidique, le conduit intégré, et la deuxième liaison fluidique forment ensemble une conduite de circuit de refroidissement.

Le système de motorisation selon l'invention peut optionnellement présenter une ou plusieurs des caractéristiques suivantes :
- ladite conduite de circuit de refroidissement entoure au moins partiellement le moteur électrique ; ainsi le moteur électrique peut être logé au plus près du moteur thermique, sans avoir à prévoir le passage du circuit de refroidissement entre les deux moteurs ;
- l'échangeur est un échangeur huile/eau, ladite conduite de refroidissement étant branchée en sortie du circuit de refroidissement intégré au carter-cylindres du moteur thermique, et l'échangeur thermique étant également connecté à un circuit de lubrification agencé de manière à échanger des calories avec le circuit de refroidissement ; cela permet de réchauffer l'huile circulant dans le circuit de lubrification par le fluide de refroidissement circulant dans le circuit de refroidissement ; notamment, il peut s'agir du circuit de lubrification du moteur thermique.

Le groupe motopropulseur et/ou le système de motorisation selon l'invention peut/peuvent optionnellement présenter une ou plusieurs des caractéristiques suivantes :
- la ou les liaisons fluidiques comprennent chacune au moins un tuyau, le ou les tuyaux étant emmanchés sur un embout emmanché sur l'extrémité correspondante du conduit intégré ;
- comprenant des colliers de serrage serrant le ou les tuyaux autour du ou des embouts correspondants.

Dans la présente demande, les termes « transversal », « longitudinal », « vertical », « droite », « gauche », « supérieur », « inférieur », « dessus », et « avant » sont appliqués, sauf indication contraire, selon l'axe longitudinal du véhicule destiné à recevoir les objets de l'invention, et de l'arrière vers l'avant.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue de dessus partielle d'un groupe motopropulseur thermique selon l'art antérieur ;
- la figure 2 est une vue de dessus partielle d'un groupe motopropulseur selon l'invention ;
- la figure 3 est une vue en perspective de face et de gauche de la figure 2 ;
- la figure 4 correspond à une vue en perspective de face et de droite de la figure 2, sans le moteur électrique ;
- la figure 5 est une vue partielle en perspective de droite et de dessus du support de moteur électrique de la figure 4 ;
- la figure 6 est une vue en perspective d'un embout se fixant dans le support de la figure 5
- la figure 7 est une section de la figure 5, vue depuis la gauche, mais avec des liaisons fluidiques branchées sur le support.

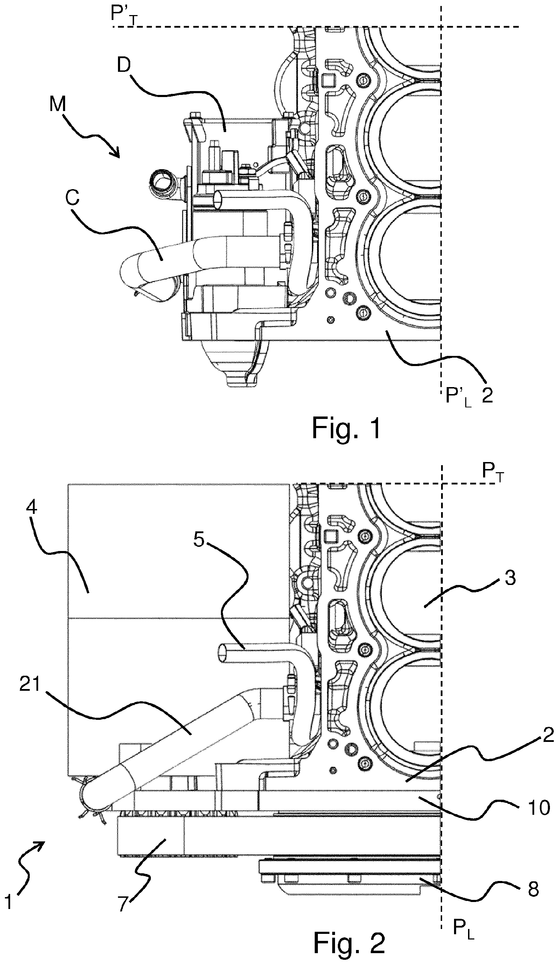

La figure 1 illustre un groupe motopropulseur M thermique classique. Seule une partie de ce groupe motopropulseur M est représentée. Il s'agit de la partie comprise d'une part à gauche d'un plan vertical et transversal P'_{T} par rapport à l'axe du moteur thermique, et d'autre part en avant d'un plan vertical et longitudinal P'_{L} par rapport à l'axe du moteur thermique du groupe motopropulseur M. Concernant le moteur thermique, seul son carter-cylindres 2 du est représenté.

Un démarreur D et un alternateur sont montés sur ce carter-cylindres 2. Une conduite C du circuit de refroidissement, branchée à ce carter-cylindres 2, forme une portion de boucle entourant ce démarreur D et cet alternateur. Du fait du faible encombrement du démarreur et de l'alternateur, le passage de la conduite peut être réalisé par un ou plusieurs tuyaux autour de ce démarreur D, sans que la largeur du groupe motopropulseur M ne soit trop importante et sans générer de grands débattements de ces tuyaux.

La figure 2 illustre un exemple de groupe motopropulseur 1 hybride selon l'invention, comprenant un moteur thermique avec un carter-cylindres 2 similaire en termes de dimension à celui illustré en figure 1.

Dans cet exemple, l'axe du moteur ou axe longitudinal du moteur est orienté transversalement. Cet axe est parallèle à la direction d'alignement des fûts 3, encore appelés cylindres, du carter-cylindres 2.

Selon l'invention le groupe motopropulseur 1 comprend également un moteur électrique 4, qui peut, comme ici, être agencé côte à côte avec le carter-cylindres 2.

Comme on peut le voir en figures 1 et 2, le moteur électrique 4 présente une largeur supérieure à celle du démarreur D dans le moteur thermique classique, augmentant d'autant l'encombrement du groupe motopropulseur 1, ici en avant du carter-cylindres 2.

L'adaptation d'une conduite de circuit de refroidissement formée de tuyaux, comme dans l'art antérieur, tout autour du moteur électrique 4, entrainerait l'utilisation d'une longueur de tuyaux qui, outre le coût, génèrerait de forts débattements des tuyaux lors de la circulation du véhicule dans lequel serait monté ce groupe motopropulseur et une interférence avec les pièces environnantes.

Une solution de l'invention est de réaliser une partie de la conduite du circuit de refroidissement au moyen d'une portion d'un support 10 du moteur électrique 4, comme exposé ci-après.

Ce support 10 est fixé sur le carter-cylindres 2 et le moteur électrique 4 est fixé sur le support 10.

Selon l'invention, comme ici, le carter-cylindres 2 est destiné à être fixé sur le châssis du véhicule, de sorte que le carter-cylindres 2 porte le support 10 et donc indirectement le moteur électrique 4.

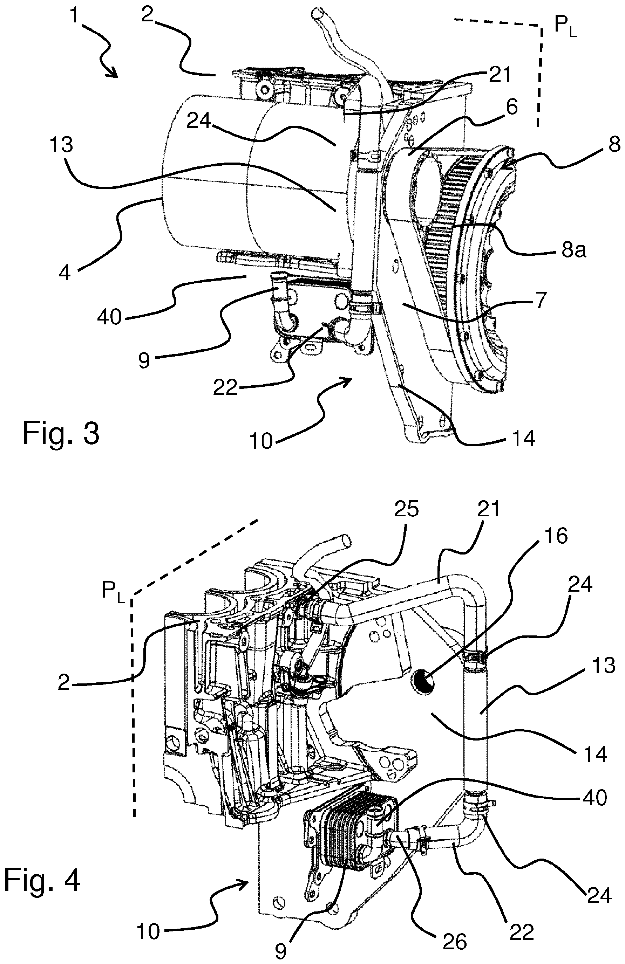

Selon l'invention, comme ici et tel qu'illustré en figures 2 et 3, le support 10 est monté sur la face d'accouplement du moteur thermique, soit entre le carte-cylindres 2 et la boîte de vitesses, plus précisément entre le carte-cylindres 2 et le module d'hybridation 8 relié à la boite de vitesses. Comme ici, le moteur électrique 4 peut être fixé du même côté du support 10 que le carter-cylindres 2, dit premier côté.

Ici, sur le deuxième côté du support opposé au premier côté, est monté un module d'hybridation 8. Ce dernier comprend :
- un embrayage 8a monté dans l'axe d'une extrémité du vilebrequin, non représenté, du moteur thermique, le vilebrequin étant apte à entrainer l'embrayage 8a,
- une poulie 6 entrainée par le moteur électrique 4 et reliée à l'embrayage notamment via une courroie 7.

Ce module d'hybridation permet selon les différentes situations d'entrainer l'embrayage par l'un ou l'autre des moteurs de manière à propulser le véhicule thermiquement ou électriquement.

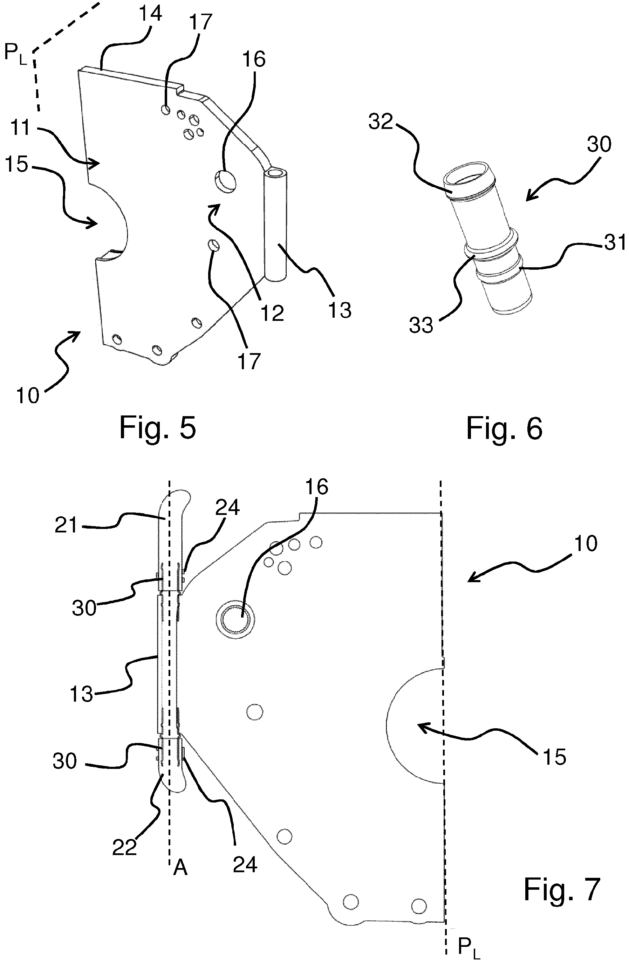

Ce support 10 est illustré isolément en figure 5. Il est ici formé par une plaque comprenant essentiellement une portion plane 14, qui comprend elle-même une portion de montage 11 et une portion de fixation 12.

La portion de montage 11 comprend un premier orifice 15 traversant et des premiers trous de fixation 17 traversants. La portion de fixation 12 comprend un deuxième orifice 16 traversant.

En figure 5, seule la partie du support 10 à l'avant du plan longitudinal P_{L} par rapport à l'axe du moteur est représentée.

La plaque formant le support 10 et donc la portion plane 14 s'étend sensiblement dans un plan, dit plan de plaque. Selon l'invention, comme ici, ce plan de plaque peut être sensiblement perpendiculaire à l'axe du moteur thermique.

Le support 10 comprend également une portion formant un conduit intégré 13. Ce conduit intégré 13 forme une pièce monobloc avec la portion plane 14.

Il peut s'agir, comme ici, d'un conduit cylindrique de section interne circulaire. Le conduit intégré 13 s'étend donc ici selon sa longueur selon un axe de conduit A. L'axe de conduit A peut-être parallèle au plan de plaque, notamment, comme on peut le voir en figures 2 et 7, il peut être compris dans le plan de plaque. Ici, l'axe de conduit A est vertical.

Comme on peut le voir en figures 2 à 4, lors de l'assemblage du groupe motopropulseur 1, la portion de montage 11 est montée sur le carter-cylindres 2, de manière à ce qu'une extrémité de couplage du vilebrequin, non représenté, du moteur thermique traverse le premier orifice 15, pour se connecter à l'embrayage 8a. Les trous de fixation 17 permettent de fixer la portion plane 14 au carter-cylindres 2, par exemple par des boulons.

Le moteur électrique 4 est fixé à la portion de fixation 12, de manière à ce qu'une extrémité de l'arbre d'entrainement, non représenté, du moteur électrique traverse le deuxième orifice 16, pour se connecter à la poulie 6. Cette fixation peut par exemple être assurée par des écrous.

Comme on peut le voir en figures 2 à 4, en particulier en figure 4, une conduite de circuit de refroidissement, ci-après conduite de refroidissement, est agencée en boucle non refermée sur elle-même, entre une sortie de liquide de refroidissement 25 du carter-cylindres 2 et une entrée 26 de ce liquide dans l'échangeur 9.

Cette conduite de refroidissement est formé par :
- un premier tuyau 21 reliant en fluide la sortie de liquide de refroidissement 25 à l'extrémité supérieure du conduit intégré 13,
- le conduit intégré 13, et
- un deuxième tuyau 22 reliant l'extrémité inférieure du conduit intégré 13 à l'entrée 26 de ce liquide dans l'échangeur 9.

Ainsi, une fois que le liquide de refroidissement s'est chargé en calories en passant au travers du circuit de refroidissement intégré au carter-cylindres 2, il entre dans l'échangeur 9, et réchauffe un circuit d'huile de lubrification du moteur, par exemple les paliers du vilebrequin. En figure 4, on peut observer la sortie d'huile 40 de l'échangeur, orientée ici vers le carter-cylindres 2.

Les tuyaux 21, 22 sont ici branchés au conduit intégré via des embouts 30, tel que celui illustré en figure 6.

Par exemple, comme illustré en figure 7, l'embout 30 est emmanché en force d'un côté dans le conduit intégré 13 et de l'autre dans le tuyau correspondant 21, 22. Ici, un renflement 31, 32 est agencé de chaque côté de l'embout 30 et présente un diamètre sensiblement supérieur au diamètre interne des tuyaux 21, 22 pour permettre cet emmanchement en force.

Un joint 33 d'étanchéité est agencé entre ces deux renflements 31, 32. L'embout 30 est enfoncé jusqu'à ce joint 33 dans le tuyau 21, 22 correspondant et le conduit intégré 13.

Des colliers de serrage 24 sont ici utilisés pour assurer le serrage des tuyaux 21, 22 sur l'embout 30 correspondant.

La boucle formée par la conduite de refroidissement permet ainsi de laisser l'emplacement pour monter le moteur électrique 4 côte à côte avec le carter-cylindres 2. On gagne ainsi en largeur du groupe motopropulseur 1.

Selon l'invention, comme ici, le conduit intégré 13 peut être ménagé en vis-à-vis de la face du moteur électrique 4 fixée au support 10. Ainsi, le parcours de la conduite de refroidissement passe en dehors de l'espace entre le moteur électrique 4 et le véhicule. Ainsi, on gagne en compacité en largeur du groupe motopropulseur 1, soit ici longitudinalement par rapport au véhicule.

Par ailleurs, les composants utilisés, tels que les tuyaux 21, 22, les colliers 24 et les embouts 30 peuvent être standards, ce qui facilite la conception et la validation du groupe motopropulseur 1.

Le groupe motopropulseur 1, l'échangeur 9 et la conduite de refroidissement forment un système de motorisation selon un exemple de réalisation de l'invention.

## Revendications

1. Support (10) de moteur électrique comprenant au moins trois portions distinctes:
- une portion de montage (11) sur un moteur thermique,
- une portion de fixation (12) d'un moteur électrique,
- une portion formant un conduit intégré (13) de circulation de fluide.

2. Support selon la revendication 1, dans lequel le support (10) est une plaque.

3. Support selon la revendication 2, dans lequel la portion de montage (11) comprend un orifice (15) pour le passage d'un arbre d'entrainement du moteur thermique, et/ou la portion de fixation comprend un orifice (16) pour passage d'un arbre d'entrainement du moteur électrique (4).

4. Support selon la revendication 2 ou selon la revendication 3, dans lequel le conduit intégré (13) s'étend selon un axe (A) contenu dans un plan selon lequel s'étend la plaque formée par le support (10).

5. Support selon l'une quelconque des revendications précédentes, dans lequel le conduit intégré (13) forme une pièce monobloc avec l'ensemble du support (10).

6. Groupe motopropulseur hybride comprenant :
- un moteur thermique,
- un support (10) selon l'une des revendications précédentes, dont la portion de montage (11) est fixée au moteur thermique,
- un moteur électrique (4) fixé sur ladite portion de fixation (12) de manière à être supporté par ledit support,
- une première liaison fluidique (21) entre une première extrémité du conduit intégré (13) et le moteur thermique.

7. Système de motorisation hybride comprenant :
- un groupe motopropulseur (1) selon la revendication 6,
- un échangeur thermique (9),
- une deuxième liaison fluidique (22) entre une deuxième extrémité du conduit intégré (13) et l'échangeur thermique.

8. Système de motorisation selon la revendication 7, dans lequel la première liaison fluidique (21), le conduit intégré (13), et la deuxième liaison fluidique (22) forment ensemble une conduite de circuit de refroidissement entourant au moins partiellement le moteur électrique (4).

9. Groupe motopropulseur selon la revendication 6 ou système de motorisation selon la revendication 7 ou 8, dans lequel la ou les liaisons fluidiques (21, 22) comprennent chacune au moins un tuyau, le ou les tuyaux étant emmanchés sur un embout (30) emmanché sur l'extrémité correspondante du conduit intégré (13).

10. Groupe motopropulseur et/ou système de motorisation selon la revendication 9, comprenant des colliers de serrage (24) serrant le ou les tuyaux autour du ou des embouts (30) correspondants.

11. Véhicule comprenant un groupe motopropulseur (1) et/ou un système de motorisation selon l'une quelconque des revendications précédentes.

## Patentansprüche

1. Halterung (10) für einen elektrischen Motor, die mindestens drei verschiedene Abschnitte beinhaltet:
- einen Abschnitt zur Montage (11) an einem Verbrennungsmotor,
- einen Abschnitt zur Anbringung (12) eines elektrischen Motors,
- einen Abschnitt, der eine integrierte Rohrleitung (13) zur Zirkulation eines Fluids bildet.

2. Halterung nach Anspruch 1, wobei die Halterung (10) eine Platte ist.

3. Halterung nach Anspruch 2, wobei der Montageabschnitt (11) eine Öffnung (15) für den Durchgang einer Antriebswelle des Verbrennungsmotors beinhaltet und/oder der Anbringungsabschnitt eine Öffnung (16) für den Durchgang einer Antriebswelle des elektrischen Motors (4) beinhaltet.

4. Halterung nach Anspruch 2 oder nach Anspruch 3, wobei sich die integrierte Rohrleitung (13) gemäß einer Achse (A) erstreckt, die in einer Ebene enthalten ist, gemäß derer sich die durch die Halterung (10) gebildete Platte erstreckt.

5. Halterung nach einem der vorhergehenden Ansprüche, wobei die integrierte Rohrleitung (13) mit der gesamten Halterung (10) einstückig ausgebildet ist.

6. Hybride Motorantriebsgruppe, die Folgendes beinhaltet:
- einen Verbrennungsmotor,
- eine Halterung (10) nach einem der vorhergehenden Ansprüche, deren Montageabschnitt (11) an dem Verbrennungsmotor angebracht ist,
- einen elektrischen Motor (4), der so an dem Anbringungsabschnitt (12) angebracht ist, dass er durch die Halterung gehalten wird,
- eine erste Fluidverbindung (21) zwischen einem ersten Ende der integrierten Rohrleitung (13) und dem Verbrennungsmotor.

7. Hybrides Antriebssystem, das Folgendes beinhaltet:
- eine Motorantriebsgruppe (1) nach Anspruch 6,
- einen Wärmetauscher (9),
- eine zweite Fluidverbindung (22) zwischen einem zweiten Ende der integrierten Rohrleitung (13) und dem Wärmetauscher.

8. Antriebssystem nach Anspruch 7, wobei die erste Fluidverbindung (21), die integrierte Rohrleitung (13) und die zweite Fluidverbindung (22) gemeinsam eine Kühlkreislaufleitung bilden, die den elektrischen Motor (4) mindestens teilweise umgibt.

9. Motorantriebsgruppe nach Anspruch 6 oder Antriebssystem nach Anspruch 7 oder 8, wobei die eine oder die mehreren Fluidverbindungen (21, 22) jeweils mindestens einen Schlauch beinhalten, wobei der oder die Schläuche auf ein Anschlussstück (30) gesteckt sind, das auf das entsprechende Ende der integrierten Rohrleitung (13) gesteckt ist.

10. Motorantriebsgruppe und/oder Antriebssystem nach Anspruch 9, beinhaltend Klemmschellen (24), die den oder die Schläuche um das oder die entsprechenden Anschlussstücke (30) klemmen.

11. Fahrzeug, das eine Motorantriebsgruppe (1) und/oder ein Antriebssystem nach einem der vorhergehenden Ansprüche beinhaltet.

## Claims

1. Electric motor support (10) comprising at least three separate portions:
- a mounting portion (11) for mounting on a combustion engine,
- a fastening portion (12) for fastening an electric motor,
- a portion forming an integrated fluid-circulation conduit (13).

2. Support according to Claim 1, wherein the support (10) is a plate.

3. Support according to Claim 2, wherein the mounting portion (11) comprises an orifice (15) for the passage of a driveshaft of the combustion engine, and/or the fastening portion comprises an orifice (16) for the passage of a driveshaft of the electric motor (4).

4. Support according to Claim 2 or according to Claim 3, wherein the integrated conduit (13) extends along an axis (A) contained within a plane in which the plate formed by the support (10) extends.

5. Support according to any one of the preceding claims, wherein the integrated conduit (13) forms a one-piece component with the assembly of the support (10).

6. Hybrid propulsion unit comprising:
- a combustion engine,
- a support (10) according to one of the preceding claims, the mounting portion (11) of which is fixed to the combustion engine,
- an electric motor (4) fixed to said fixing portion (12) so as to be supported by said support,
- a first fluidic connection (21) between a first end of the integrated conduit (13) and the combustion engine.

7. Hybrid drive system comprising:
- a propulsion unit (1) according to Claim 6,
- a heat exchanger (9),
- a second fluidic connection (22) between a second end of the integrated conduit (13) and the heat exchanger.

8. Drive system according to Claim 7, wherein the first fluidic connection (21), the integrated conduit (13) and the second fluidic connection (22) together form a cooling-circuit duct at least partially surrounding the electric motor (4).

9. Propulsion unit according to Claim 6 or drive system according to Claim 7 or 8, wherein the fluidic connection or connections (21, 22) each comprise at least one pipe, the pipe or pipes being fitted onto an end-piece (30) fitted onto the corresponding end of the integrated conduit (13).

10. Propulsion unit and/or drive system according to Claim 9, comprising clamping collars (24) clamping the pipe or pipes around the corresponding end-piece or endpieces (30) .

11. Vehicle comprising a propulsion unit (1) and/or a drive system according to any one of the preceding claims.
